# EUROPEAN PATENT APPLICATION

(11) **EP 4 112 442 A1**
(43) Date of publication of application: **04.01.2023**
(21) Application number: 20935260.8
(22) Date of filing: 28.12.2020
(51) Int. Cl.: B63J 4/00, B63B 13/00, C02F 1/467, C02F 103/00

(54) **METHOD FOR TREATING BALLAST WATER**

(30) Priority: 12.05.2020 KR 20200056537
(71) Applicant: Techwin Co., Ltd., Cheongju-si, Chungcheongbuk-do 28580 (KR)
(72) Inventor: JUNG, Boong Ik, Cheongju-si, Chungcheongbuk-do 28582 (KR); KIM, Jung Sik, Sejong-si 30098 (KR); SHIN, Hyun Su, Daejeon 34390 (KR)
(74) Representative: BCKIP Part mbB
(86) International application number: PCT/KR2020/019206
(87) International publication number: WO 2021/230458

(57) **Abstract**

One aspect of the present invention provides a method of treating ballast water, which includes: a first step of transporting a raw material from a first base to a second base where a vessel is configured to be anchored; a second step of inputting the raw material into an on-site treatment agent manufacturing facility located at the second base to manufacture a treatment agent; and a third step of supplying the treatment agent to the vessel anchored at the second base and treating ballast water using the treatment agent.

## Description

### [Technical Field]

The present invention relates to a method of treating ballast water, and specifically, to a method capable of more quickly, simply, and economically treating ballast water by manufacturing a treatment agent at a base where a vessel is configured to be anchored and then injecting the treatment agent into the anchored vessel or installing and replacing a cartridge carrying the treatment agent in the vessel.

### [Background Art]

Sodium hypochlorite (NaOCI) is being applied to various fields such as water, sewage, and wastewater treatment, seawater electrolysis, ballast water treatment, sterilization of agrifoods and food materials, and the like.

Recently, an on-site sodium hypochlorite manufacturing apparatus suitable for smallscale water purification plants in terms of stability, convenience of maintenance, and economic feasibility has been in the spotlight. The on-site sodium hypochlorite manufacturing apparatus enables the manufacture of sodium hypochlorite having a low concentration of 0.4 to 1.0% by electrolysis of brine, but the sodium hypochlorite manufacturing apparatus has problems in that removal of by-products is difficult, a salt conversion rate and power efficiency are low, and the application to large-capacity facilities is difficult due to a low sodium hypochlorite concentration.

Korean Registered Patent No. 10-1226640, Korean Patent Application Publication No. 10-2012-0002074, and the like disclose an apparatus and/or method capable of manufacturing high concentration sodium hypochlorite using a diaphragm, but they have a problem in that, since a means for purifying brine (aqueous NaCl solution) supplied to a anode chamber is not provided, ionic impurities, such as calcium, magnesium, and the like, remaining in sodium chloride contaminate the ion exchange membrane of an electrolyzer to reduce power efficiency and shorten the lifespan of the ion exchange membrane and also have a problem in that it is difficult to control the material balance of brine supplied to a anode chamber only using a conductivity sensor and a temperature sensor.

In addition, in the case of such a diaphragm-type electrolyzer, a larger amount of salt is consumed compared to water during the electrochemical reaction of salt (NaCl) and water, and accordingly, the concentration of saturated brine initially supplied to a anode chamber is gradually decreased. In order to respond to the decrease in concentration, saturated brine may be injected to maintain the concentration. However, as the capacity of anode water increases, an overflow phenomenon occurs, and the overflowed anode water is subjected to a separate regeneration process, and thus there are problems such as an increase in the facility, cost, and scale caused by the regeneration process and an increase in the human/material burden caused by the use of chemicals such as hydrochloric acid (HCl), sodium hydroxide (NaOH), a residual chlorine neutralizing agent, and the like.

Korean Registered Patent No. 10-2074331 and the like disclose an apparatus of manufacturing high concentration sodium hypochlorite on site using seawater or artificial brine. However, they are disadvantageous in terms of efficiency and economic feasibility because, when the apparatus is directly installed in a facility or a vessel, the expense burden of the user of the facility or vessel may increase, and even when the apparatus is not directly installed in a facility or a vessel, a separate facility for applying sodium hypochlorite thus manufactured to the facility or vessel is required.

In particular, since the concentration of a sodium hypochlorite solution used to treat ballast water has restrictions not only by the nationality of a vessel but also by the laws and international treaties of the country where the vessel is anchored, it is difficult to address the restrictions by producing various concentrations of sodium hypochlorite using the conventional on-site apparatus.

### [Disclosure]

### [Technical Problem]

The present invention is directed to providing a method of treating ballast water, which has improved economic feasibility and efficiency in the manufacture of a treatment agent and the treatment of ballast water using the treatment agent and is particularly capable of simply and smoothly responding to various variables and restrictions such as not only the nationality of a vessel but also the laws and international treaties of the country where the vessel is anchored.

### [Technical Solution]

One aspect of the present invention provides a method of treating ballast water, which includes: a first step of transporting a raw material from a first base to a second base where a vessel is configured to be anchored; a second step of inputting the raw material into an on-site treatment agent manufacturing facility located at the second base to manufacture a treatment agent; and a third step of supplying the treatment agent to the vessel anchored at the second base and treating ballast water using the treatment agent.

In an embodiment, the raw material may include a chlorine compound, a salt of an oxoacid, or a combination thereof.

In an embodiment, the raw material may be a solid, liquid, or a combination thereof.

In an embodiment, the first step may be performed through one selected from the group consisting of a land route, a sea route, an air route, and a combination of two or more thereof.

In an embodiment, the second base may be a harbor, a port, or a coast.

In an embodiment, the on-site treatment agent manufacturing facility may be an electrolysis facility.

In an embodiment, the electrolysis facility may include one of the following (i) to (iii):
(i) a diaphragm-free electrolysis apparatus including a anode and a cathode; (ii) a diaphragm-type electrolysis apparatus including a anode, a cathode, and a diaphragm; and (iii) a combination of the (i) and (ii).

In an embodiment, the electrolysis facility may include, according to a concentration of the treatment agent: a first electrolysis line configured to manufacture a treatment agent having a first concentration; and a second electrolysis line configured to manufacture a treatment agent having a second concentration, wherein the first and second concentrations may be different.

In an embodiment, the concentration of the treatment agent may be determined based on a database provided by one selected from the group consisting of the nationality of the vessel, the countries in which the first and second bases are located, the laws and treaties thereof, the order of a user, and a combination of two or more thereof.

In an embodiment, the electrolysis facility may include, according to a type of the treatment agent: a first electrolysis line configured to manufacture a first treatment agent; and a second electrolysis line configured to manufacture a second treatment agent, wherein the types of the first and second treatment agents may be different.

In an embodiment, the concentration of the treatment agent may be 0.01 to 50%.

In an embodiment, the treatment agent may include a chloric acid compound, a salt of a peroxoacid, or a combination thereof.

In an embodiment, the chloric acid compound may be hypochlorite.

In an embodiment, in the second step, the manufactured treatment agent may be stored in an airtight repository in which one selected from the group consisting of temperature, humidity, pressure, and a combination of two or more thereof is controlled.

In an embodiment, the treatment agent may be injected into a cartridge in the second step, and the cartridge may be installed in the vessel anchored at the second base in the third step.

### [Advantageous Effects]

A method of treating ballast water according to one aspect of the present invention is capable of more quickly, simply, and economically treating ballast water by manufacturing a treatment agent at a base where a vessel is configured to be anchored and then injecting the treatment agent into the anchored vessel or installing and replacing a cartridge carrying the treatment agent in the vessel.

However, it is to be understood that the effects of the present invention are not limited to the above-described effects but include all effects deducible from the configuration of the invention described in the detailed description of the invention or in the claims.

### [Description of Drawings]

FIG. 1 is a schematic diagram of a method of treating ballast water according to an embodiment of the present invention.
FIG. 2 to FIG. 4 are schematic diagrams of electrolysis facilities according to embodiments of the present invention.
FIG. 5 is a schematic diagram of an electrolysis line according to an embodiment of the present invention.
FIG. 6 is a schematic diagram of an electrolysis line according to another embodiment of the present invention.
FIG. 7 is a schematic diagram of an electrolysis line according to still another embodiment of the present invention.
FIG. 8 is a schematic diagram of a vessel to which a treatment agent manufactured according to an embodiment of the present invention is applied.
FIG. 9 is a schematic diagram of the operating mechanism of an electrolysis facility according to an embodiment of the present invention.

### [Modes of the Invention]

Hereinafter, exemplary embodiments of the present invention will be described in detail with reference to accompanying drawings. However, it should be understood that the present invention can be implemented in various forms, and that it is not intended to limit the present invention to the exemplary embodiments. Also, in the drawings, descriptions of parts unrelated to the detailed description are omitted to clearly describe the present invention. Throughout the specification, like numbers refer to like elements.

Throughout the specification, a certain part being "connected" to another part means that the certain part is "directly connected" to the other part or that the certain part is "indirectly connected" to the other part through another member interposed between the two parts. Also, a certain part "including" a certain element signifies that the certain part may further include, instead of excluding, another element unless particularly indicated otherwise.

Hereinafter, exemplary embodiments of the present invention will be described in detail with reference to accompanying drawings.

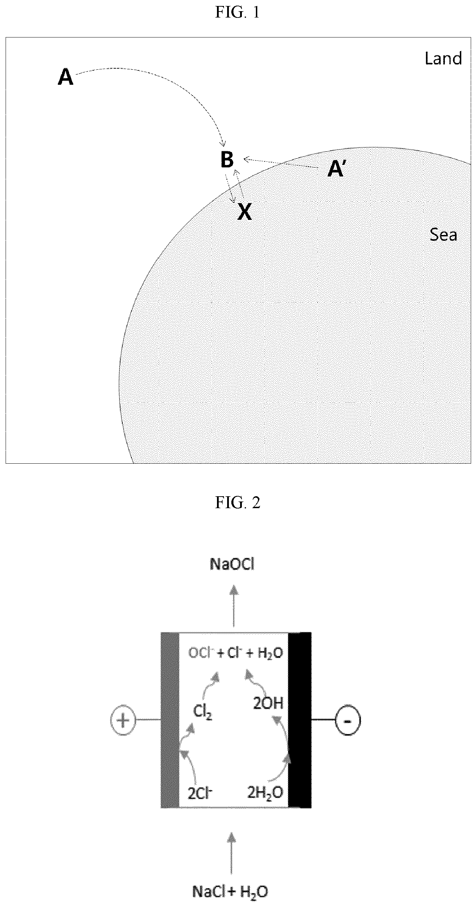

FIG. 1 is a schematic diagram of a method of treating ballast water according to an embodiment of the present invention. Referring to FIG. 1, a method of treating ballast water according to one aspect of the present invention may include: a first step of transporting a raw material from a first base A, A' to a second base B where a vessel X is configured to be anchored; a second step of inputting the raw material into an on-site treatment agent manufacturing facility located at the second base to manufacture a treatment agent; and a third step of supplying the treatment agent to the vessel X anchored at the second base B and treating ballast water using the treatment agent.

In the first step, a raw material may be transported from a first base A, A' to a second base B where a vessel X is configured to be anchored.

In the case of a conventional sterilization technique, gaseous chlorine, that is, chlorine gas, produced using an electrolysis facility in the chemical process of a large-scale chemical complex is used in a sterilization process after being charged in a high-pressure gas storage container and transported to the site. However, since the chlorine gas is toxic, it causes serious problems not only in transportation, storage, and use but also in public health and safety, and particularly, the transportation on congested roads and the use in environmental protection areas and densely populated areas become more problematic.

In addition, there has been proposed a method of preparing a desired concentration of a sodium hypochlorite solution in a large-scale chemical complex, not in a port, then transporting the same to a port, and applying the same to a vessel, but this method has problems in that the possibility of denaturation of the sodium hypochlorite solution increases as the time taken for the transportation and application increases, and the economic burden required for the transportation increases.

Specifically, assuming that the conversion rate of salt, which is one of raw materials for preparing a sodium hypochlorite solution, is 100% and one land transportation means is required to transport 1 ton of solid salt, at least 10 times more land transportation means are required to transport a 10% sodium hypochlorite solution prepared using 1 ton of solid salt, so a transportation cost is inevitably increased.

Accordingly, by transporting a raw material provided, produced, and prepared at a first base A, A' to a second base B where a vessel X is configured to be anchored in the first step and converting the raw material and/or seawater into a treatment agent using an on-site treatment agent manufacturing facility located at the second base B in the second step, safety, transportability, economic feasibility, and productivity can be substantially improved compared to the conventionally proposed methods.

The raw material may include a chlorine compound, a salt of an oxoacid, or a combination thereof. The chlorine compound may be, for example, one selected from the group consisting of potassium chloride, sodium chloride, calcium chloride, magnesium chloride, and a combination of two or more thereof, but the present invention is not limited thereto.

In addition, the raw material may be a solid, liquid, or a combination thereof.

When the first base A is present on land, the raw material may be, for example, solid salt, but the present invention is not limited thereto. As used herein, the term "salt" means solid salt containing sodium chloride (NaCl) as a main component, and the solid salt may further contain chlorides such as potassium chloride (KCl) and magnesium chloride (MgCh) in addition to the sodium chloride (NaCI).

When the first base A' is present on the sea or is a harbor, a port, or a coast, the raw material may be, for example, liquid seawater, a concentrate thereof, and/or a purification product thereof, but the present invention is not limited thereto.

The first step may be performed through one selected from the group consisting of a land route, a sea route, an air route, and a combination of two or more thereof, preferably, through a land route, but the present invention is not limited thereto. Also, a transportation means in the first step may be one selected from the group consisting of a land transportation means, a sea transportation means, an air transportation means, and a combination of two or more thereof, preferably, a land transportation means, but the present invention is not limited thereto.

The second base B is not particularly limited as long as it has a facility where a vessel X is configured to be anchored, and is preferably a harbor, a port, or a coast, but the present invention is not limited thereto. Also, the first base A, A' and the second base B may be located on the same continent, and at least one of the first base A, A' and the second base B may be located in adjacent island areas or on other continents. When at least one of the first base A, A' and the second base B is located in adjacent island areas, the raw material may be transported by a sea transportation means and/or an air transportation means in the first step, but the present invention is not limited thereto.

In the second step, the raw material and/or seawater may be input into an on-site treatment agent manufacturing facility located at the second base B to manufacture a predetermined concentration of a treatment agent. The on-site treatment agent manufacturing facility may be an electrolysis facility.

As used herein, the term "electrolysis facility" means a facility including one or more electrolysis lines. Particularly, when there are two or more electrolysis lines, each electrolysis line may be independently configured according to a concentration of a treatment agent to be manufactured and may include a unit electrolyzer or a unit electrolysis apparatus connected in series and/or in parallel.

The treatment agent may be a solution, preferably, an aqueous solution, including a chloric acid compound, a salt of a peroxoacid, or a combination thereof. The chloric acid compound may be hypochlorite, preferably, sodium hypochlorite. Also, the treatment agent may be manufactured in a solid phase, and the solid-phase treatment agent may be used after being prepared into a solution having a predetermined concentration using a separate dissolution apparatus. The dissolution apparatus may be installed in the second base and/or the vessel.

FIG. 2 to FIG. 4 are schematic diagrams of electrolysis facilities according to embodiments of the present invention. Referring to FIG. 2 to FIG. 4, the electrolysis facility may include one of the following (i) to (iii): (i) a diaphragm-free electrolysis apparatus including a anode and a cathode; (ii) a diaphragm-type electrolysis apparatus including a anode, a cathode, and a diaphragm; and (iii) a combination of (i) and (ii). As necessary, the diaphragm-type electrolysis apparatus may further include a reaction unit in which materials produced at the anode and the cathode react to produce a treatment agent.

A process of producing hypochlorite, which is a treatment agent produced by electrolysis of a chlorine compound which is the raw material, is as follows.

When the chlorine compound enters an electrolysis apparatus, an oxidation reaction in which a chlorine ion (CI"), which is an anion of the chlorine compound, is converted into chlorine gas (Cl₂) occurs at a anode, and a reduction reaction in which water (H₂O) is converted into hydrogen gas (H2) and a hydroxide ion (OH⁻) occurs at a cathode.

The chlorine gas and hydroxide ion respectively produced at the anode and the cathode form a hypochlorite ion (OCl⁻) or hypochlorous acid (HOCI) by a chemical reaction in a reaction unit provided inside and/or outside the electrolysis apparatus. In this case, the hypochlorite ion and hypochlorous acid maintain a chemical equilibrium state according to a pH. When sodium chloride (NaCl) is used as the raw material, a hypochlorite ion (OCl⁻) is combined with a sodium ion (Na⁺) to produce sodium hypochlorite (NaOCI).

Referring to FIG. 2, the electrolysis facility may include a diaphragm-free electrolysis apparatus including a anode and a cathode. In the diaphragm-free electrolysis apparatus, the above-described oxidation and reduction reactions may occur respectively at the anode and the cathode, and chlorine gas and a hydroxide ion may react in a bulk phase inside the diaphragm-free electrolysis apparatus to produce hypochlorite.

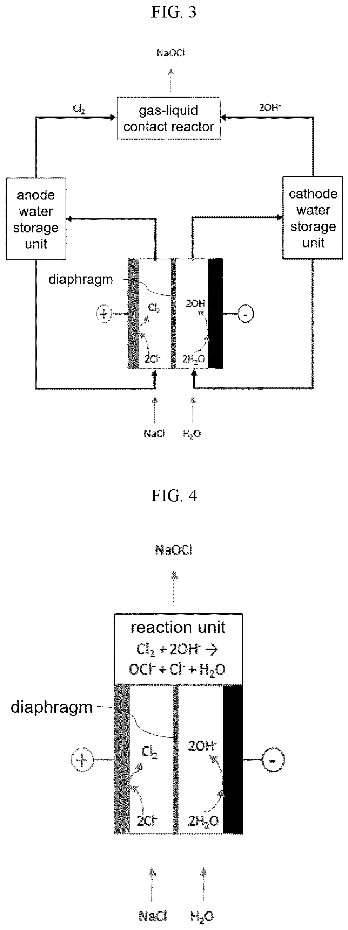

Referring to FIG. 3, the electrolysis facility may include a diaphragm-type electrolysis apparatus including a anode chamber including a anode, a cathode chamber including a cathode, a diaphragm that partitions the anode chamber and the cathode chamber, and a reaction unit in which materials produced at the anode and the cathode react to produce a treatment agent. The reaction unit may be provided separately outside an electrolyzer including the anode, the cathode, and the diaphragm, and chlorine gas and a hydroxide ion respectively produced at the anode and the cathode may react in the reaction unit to produce hypochlorite. As necessary, a anode water storage tank and a cathode water storage tank may be provided respectively between the anode chamber and the reaction unit and between the cathode chamber and the reaction unit, and anode water and cathode water stored in the anode water storage tank and the cathode water storage tank may be respectively circulated between the anode chamber and the anode water storage tank and between the cathode chamber and the cathode water storage tank.

The anode water storage tank and the cathode water storage tank are configured to store anode water and cathode water so that they circulate the anode chamber and cathode chamber of the diaphragm-type electrolyzer, and the anode water storage tank and/or the cathode water storage tank may be provided with a conductivity sensor and/or a water level sensor. Preferably, the conductivity sensor may be provided on a anode water circulating conduit and/or a cathode water circulating conduit, and the water level sensor may be provided in the anode water storage tank and/or the cathode water storage tank.

A conductivity valve may be opened and closed by the conductivity sensor to control the concentration of anode water and/or cathode water, and a water level valve may be opened and closed by the water level sensor to control the supply of pure water and the water level of anode water and/or cathode water. That is, the water level and concentration of anode water and/or cathode water may be simultaneously controlled by the conductivity sensor and the water level sensor to adjust the material balance of the anode water storage tank and/or the cathode water storage tank.

Referring to FIG. 4, the reaction unit of FIG. 3 may be configured integrally with an electrolyzer including a anode, a cathode, and a diaphragm, and as necessary, the anode water storage tank and/or the cathode water storage tank may be appropriately omitted in the integrally configured electrolyzer.

Meanwhile, when a salt of an oxoacid is used as the raw material in the first step, the salt of an oxoacid may be subjected to electrolysis in the second step to prepare a salt of a peroxoacid, preferably a solution containing a salt of a peroxoacid, and more preferably an aqueous solution containing a salt of a peroxoacid.

Specifically, a persulfate among the salts of peroxoacids may be prepared in a solid phase, and as necessary, when a solid-phase persulfate is used after being prepared into a solution, it is possible to reduce the volume required for storing the solid-phase persulfate and solve problems caused by the denaturation and concentration change of the solution due to long-term storage. For example, when the solid-phase persulfate is sodium persulfate, water may be used as a solvent.

The solid-phase sodium persulfate may be stored in a treatment agent storage tank and, as necessary, supplied to a ballast water tank through a treatment agent injection unit after being dissolving in water in a dissolution apparatus separately installed in a vessel. Also, the solid-phase sodium persulfate may be stored in a repository to be described below which is located in the second base B and, as necessary, injected into a treatment agent storage tank of a vessel after being dissolved in water in a dissolution apparatus separately installed at the second base B.

The dissolution apparatus may generally include a dissolution bath, a solid-phase treatment agent transfer line, a stirrer, a solvent supply line, and a produced liquid-phase treatment agent injection line. Also, the dissolution apparatus may further include a temperature adjustment apparatus capable of controlling a temperature change caused by heat generation and/or heat absorption that may occur during dissolution. The salt of an oxoacid may be, for example, a sulfate, hydrogen sulfate, or a combination thereof, preferably, ammonium sulfate ((NH₄)₂SO₄), but the present invention is not limited thereto. The salt of a peroxoacid may be one selected from the group consisting of ammonium persulfate ((NH₄)₂S₂O₈), sodium persulfate (Na₂S₂O₈), potassium persulfate (K₂S₂O₈), and a combination of two or more thereof, preferably, ammonium persulfate having relatively high electrolysis efficiency, but the present invention is not limited thereto.

The sulfate is oxidized on the surface of a anode to donate electrons and converted into a persulfate ion. The reaction formula is as follows.

-2SO₄²⁻ → S₂O₈²⁻ + 2e⁻

-2HSO₄⁻ →S₂O₈²⁻ + 2H⁺ + 2e⁻

The production mechanism of the persulfates is as follows.
- Ammonium persulfate:

   (NH₄)₂SO₄ + H₂SO₄ → (NH₄)₂S₂O₈ + H₂
- Sodium persulfate:

   (NH₄)₂S₂O₈ + 2NaOH → Na₂S₂O₈ + 2NH₄
- Potassium persulfate:

   (NH₄)₂S₂O₈ + 2KOH → K₂S₂O₈ + 2NH₄

Ammonium persulfate may be prepared by an electrochemical method using ammonium sulfate and an aqueous sulfuric acid solution. Specifically, ammonium persulfate may be prepared by installing a diaphragm, for example, an ion exchange membrane, between a anode chamber and a cathode chamber to configure an electrolyzer, injecting ammonium sulfate and an aqueous sulfuric acid solution into the anode chamber and the cathode chamber, respectively, and applying electricity. Sodium persulfate and potassium persulfate may be prepared by reacting the electrochemically prepared ammonium persulfate with aqueous sodium hydroxide (NaOH) and potassium hydroxide (KOH) solutions to substitute ammonium with sodium (Na⁺) or potassium (K⁺). Meanwhile, sodium sulfate (Na₂SO₄) or potassium sulfate (K₂SO₄) may be directly subjected to electrolysis to prepare sodium persulfate or potassium persulfate.

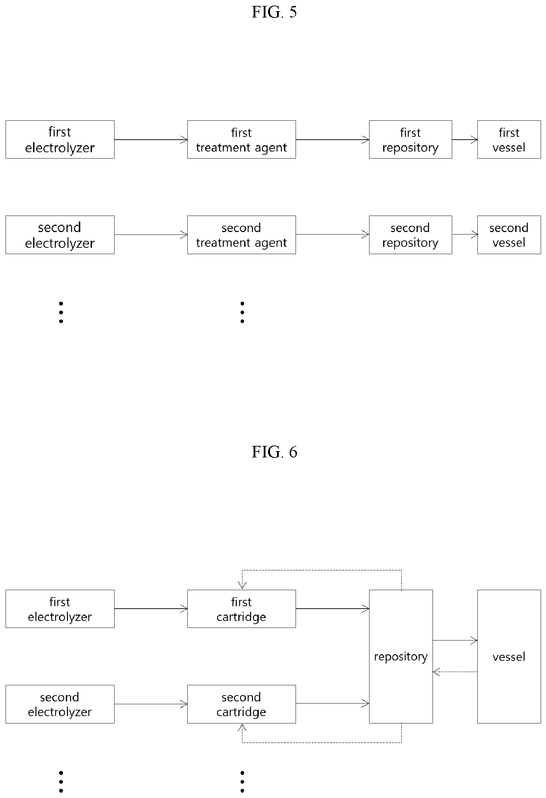

FIG. 5 to FIG. 7 are schematic diagrams of electrolysis lines according to embodiments of the present invention. First, referring to FIG. 5, the electrolysis facility may include, according to a concentration of the treatment agent: a first electrolysis line configured to manufacture a treatment agent having a first concentration; and a second electrolysis line configured to manufacture a treatment agent having a second concentration, wherein the first and second concentrations may be different.

The concentration of the treatment agent may be 0.01 to 50% (by weight). For example, the first and second concentrations of the treatment agent are set to 0.01 to 1.5% and 1.5 to 50%, respectively, and the first and second electrolysis lines may be operated based on the set concentrations.

The electrolysis facility may consist of three or more electrolysis lines according to a concentration of the treatment agent to be manufactured. For example, when the electrolysis facility consists of three electrolysis lines, the first to third concentrations of the treatment agent are set to 0.01 to 1.5%, 1.5 to 15%, and 15 to 50%, respectively, and the first to third electrolysis lines may be operated based on the set concentrations. As such, the number of the electrolysis lines may be determined to be n by dividing the treatment agent concentration of 0.01 to 50% into n detailed ranges.

In addition, the electrolysis facility may include, according to a type of the treatment agent: a first electrolysis line configured to manufacture a first treatment agent; and a second electrolysis line configured to manufacture a second treatment agent, wherein the types of the first and second treatment agents may be different. For example, the first treatment agent may be sodium hypochlorite which is one of the chloric acid compounds, and the second treatment agent may be sodium persulfate which is one of the salts of peroxoacids, but the present invention is not limited thereto.

Additionally, in the second step, the manufactured treatment agent may be stored in an airtight repository in which one selected from the group consisting of temperature, humidity, pressure, and a combination of two or more thereof is controlled. The repository may be independently provided in each electrolysis line.

In the third step, the treatment agent may be supplied to the vessel X anchored at the second base B, and ballast water may be treated using the treatment agent.

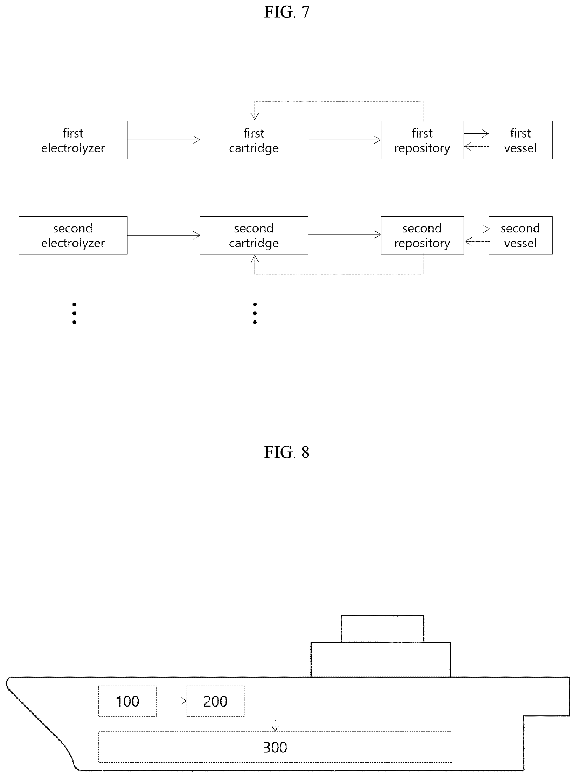

FIG. 8 is a schematic diagram of a vessel to which a treatment agent manufactured according to an embodiment of the present invention is applied. Referring to FIG. 8, the treatment agent stored in the repository may be injected into a treatment agent storage tank 100 provided at a front end of a treatment agent injection unit 200 inside the vessel anchored at the second base.

As necessary, the treatment agent storage tank 100 and the treatment agent injection unit 200 may be integrally configured, and the treatment agent storage tank 100 may further include a control apparatus capable of checking and controlling the injection amount and state of the treatment agent.

The treatment agent storage tank 100 may further include a temperature sensor, a temperature adjustment apparatus, an outdoor air blocking apparatus, a leak prevention apparatus, and the like to ensure the stability of the treatment agent. The leak prevention apparatus may include, for example, a leak alarm, a curbing, a catalytic reactor and/or neutralizer for detoxifying the leaked treatment agent, an apparatus for preventing diffusion through absorption and/or adsorption, and the like, but the present invention is not limited thereto.

Meanwhile, the treatment agent may be injected into a cartridge in the second step, and the cartridge may be installed in the vessel X anchored at the second base B in the third step. As used herein, the term "cartridge" means a container that is configured to be easily installed in and removed from a machine, apparatus, or facility (e.g., a ballast water treatment system installed in a vessel) while carrying desired contents (e.g., a treatment agent).

FIG. 6 and FIG. 7 are schematic diagrams of electrolysis lines according to embodiments of the present invention. Referring to FIG. 6 and FIG. 7, the electrolysis facility may include, according to a concentration of the treatment agent: a first electrolysis line configured to manufacture a first cartridge including a treatment agent having a first concentration; and a second electrolysis line configured to manufacture a second cartridge including a treatment agent having a second concentration, wherein the first and second concentrations may be different.

The concentration of the treatment agent may be 0.01 to 50%. For example, the concentrations of the treatment agents included in the first and second cartridges are set to 0.01 to 1.5% and 1.5 to 50%, respectively, and the first and second electrolysis lines may be operated based on the set concentrations.

The electrolysis facility may consist of three or more electrolysis lines according to a concentration of the treatment agent to be manufactured. For example, when the electrolysis facility consists of three electrolysis lines, the concentrations of the treatment agents included in the first to third cartridges are set to 0.01 to 1.5%, 1.5 to 15%, and 15 to 50%, respectively, and the first to third electrolysis lines may be operated based on the set concentrations. As such, the number of the electrolysis lines may be determined to be n by dividing the treatment agent concentration of 0.01 to 50% into n detailed ranges.

In addition, the electrolysis facility may include, according to a type of the treatment agent: a first electrolysis line configured to manufacture a first treatment agent; and a second electrolysis line configured to manufacture a second treatment agent, wherein the types of the first and second treatment agents may be different. For example, the first treatment agent may be sodium hypochlorite which is one of the chloric acid compounds, and the second treatment agent may be sodium persulfate which is one of the salts of peroxoacids, but the present invention is not limited thereto.

Additionally, in the second step, the manufactured cartridge may be stored in an airtight repository in which one selected from the group consisting of temperature, humidity, pressure, and a combination of two or more thereof is controlled.

The repository may be independently provided in each electrolysis line, and as necessary, cartridges manufactured in individual electrolysis lines may be stored integrally in a single repository.

The cartridge stored in the repository may be installed inside the vessel anchored at the second base, preferably, at a front end of the treatment agent injection unit, and the treatment agent carried in the cartridge may be injected into the ballast water tank of a vessel through the treatment agent injection unit.

When the treatment agent is injected into a cartridge in the second step, and the cartridge is installed in the vessel X anchored at the second base B in the third step, the treatment agent storage tank 100 of FIG. 8 may be replaced with the cartridge. Referring to FIG. 8 again, the ballast water treatment system installed in the vessel X may include a treatment agent cartridge 100, a treatment agent injection unit 200, and a ballast water tank 300.

The treatment agent cartridge 100 stored in the repository may be installed inside the vessel anchored at the second base, preferably, at a front end of the treatment agent injection unit 200, and the treatment agent carried in the cartridge 100 may be injected into the ballast water tank 300 of a vessel through the treatment agent injection unit 200.

In addition, a cartridge in which all of the carried treatment agent is exhausted, a socalled waste cartridge, may be removed from the vessel and transferred to the repository, and the waste cartridge may be charged with the treatment agent manufactured in the electrolysis line, stored in the repository, and then applied to the vessel anchored at the second base.

The treatment agent cartridge 100 and the treatment agent injection unit 200 may be connected, fastened, and/or fixed by a conduit, and when the conduit consists of one or more unit pipes, an adapter for adjusting the diameter between the unit pipes, a gasket for sealing a connection unit between the unit pipes, and the like may be provided.

Since the connection, fastening, and/or fixing of the treatment agent cartridge 100 and the treatment agent injection unit 200 are made only using a physical/mechanical means provided in or separately from the treatment agent cartridge 100 and the treatment agent injection unit 200, that is, without using any chemical means such as an adhesive and a sealing agent, the installation, replacement, and/or removal of the treatment agent cartridge may be quickly and simply made. As necessary, the treatment agent injection unit may be configured integrally with the cartridge.

As such, when a treatment agent-carrying cartridge is manufactured at the second base where a vessel is configured to be anchored, and then the cartridge is installed and replaced in a ballast water treatment system installed in the anchored vessel, the user, particularly, shipowner, of the vessel does not need to install a facility for manufacturing a treatment agent in a vessel and an additional facility for physically, chemically, and biologically treating ballast water, and thus ballast water can be more quickly and simply treated, and the economic burden required for treating ballast water can also be substantially reduced. Also, as necessary, when a waste cartridge in which all of the treatment agent is exhausted is collected and reused, this effect can be further maximized.

Meanwhile, independent of the repository, the cartridge may further include a sensor and/or controller configured to maintain one selected from the group consisting of the concentration of the treatment agent carried therein, internal temperature, humidity, pressure, and a combination of two or more thereof to a predetermined range, and the cartridge may be sealed to prevent the influx of impurities, air, oxygen, and the like and the efflux of the treatment agent.

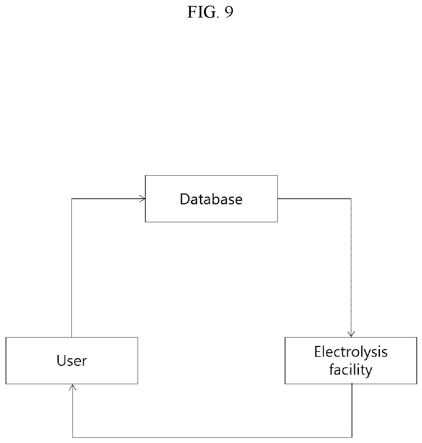

FIG. 9 is a schematic diagram of the operating mechanism of an electrolysis facility according to an embodiment of the present invention. Referring to FIG. 9, the concentration of the treatment agent may be determined based on a database provided by one selected from the group consisting of the nationality of the vessel, the countries in which the first and second bases are located, the laws and treaties thereof, the order of a user, and a combination of two or more thereof. Transmission and reception of commands, signals, or the like between the database and the electrolysis facility and the operation of the electrolysis facility may be automatically made.

The database may command a control unit provided in the electrolysis facility to manufacture a predetermined concentration of a treatment agent. The control unit receiving the command enables the manufacture of a predetermined concentration of a treatment agent by operating the electrolysis facility.

In the database, passive data regarding the nationality of a vessel, the countries in which the first and second bases are located, the laws and treaties thereof, and the like may be manually and/or automatically periodically and/or aperiodically updated and/or synchronized, and the passive data may be a criterion for determining whether the order of a user, which is active data, complies with the passive data.

As used herein, the term "passive data" means data that cannot be arbitrarily defined or changed by a user and for which compliance obligations have been imposed, and the term "active data" means data that can be arbitrarily defined or changed by a user.

For example, when the order of a user does not comply with the laws and treaties of the country corresponding to the nationality of a vessel, feedback in that a reorder is needed may be provided to the user. Conversely, when the order of a user complies with the laws and treaties of the country corresponding to the nationality of a vessel, the database may command a control unit provided in the electrolysis facility to manufacture a predetermined concentration of a treatment agent.

As such, the treatment agent and/or treatment agent-carrying cartridge manufactured by the electrolysis facility operated in an at least partially automated manner can be quickly and simply injected into and/or installed in the ballast water treatment system of the vessel anchored at the second base.

The foregoing description of the present invention is intended for illustration, and it will be understood by those skilled in the art to which the present invention pertains that the present invention can be easily modified and implemented in various other forms without changing the technical spirit or essential features of the present invention. Therefore, it should be understood that the embodiments described above are only exemplary in all aspects and not limiting. For example, each of the constituents described as being one combined entity may be implemented separately, and similarly, constituents described as being separate entities may be implemented in a combined form.

It should be understood that the scope of the present invention is defined by the following claims and that all changes or modifications derived from the meaning and scope of the claims and their equivalents are included in the scope of the present invention.

### [List of Reference Numerals]

A, A': First base
B: Second base
X: Vessel
100: Treatment agent cartridge or treatment agent storage tank
200: Treatment agent injection unit
300: Ballast water tank

## Claims

1. A method of treating ballast water, comprising:
a first step of transporting a raw material from a first base to a second base where a vessel is configured to be anchored;
a second step of inputting the raw material into an on-site treatment agent manufacturing facility located at the second base to manufacture a treatment agent; and
a third step of supplying the treatment agent to the vessel anchored at the second base and treating ballast water using the treatment agent.

2. The method of claim 1, wherein the raw material includes a chlorine compound, a salt of an oxoacid, or a combination thereof.

3. The method of claim 2, wherein the raw material is a solid, liquid, or a combination thereof.

4. The method of claim 1, wherein the first step is performed through one selected from the group consisting of a land route, a sea route, an air route, and a combination of two or more thereof.

5. The method of claim 1, wherein the second base is a harbor, a port, or a coast.

6. The method of claim 1, wherein the on-site treatment agent manufacturing facility is an electrolysis facility.

7. The method of claim 6, wherein the electrolysis facility includes one of the following (i) to (iii):
(i) a diaphragm-free electrolysis apparatus including a anode and a cathode;
(ii) a diaphragm-type electrolysis apparatus including a anode, a cathode, and a diaphragm; and
(iii) a combination of the (i) and (ii).

8. The method of claim 6, wherein the electrolysis facility includes, according to a concentration of the treatment agent:
a first electrolysis line configured to manufacture a treatment agent having a first concentration; and
a second electrolysis line configured to manufacture a treatment agent having a second concentration, and
the first and second concentrations are different.

9. The method of claim 8, wherein the concentration of the treatment agent is determined based on a database provided by one selected from the group consisting of the nationality of the vessel, the countries in which the first and second bases are located, the laws and treaties thereof, the order of a user, and a combination of two or more thereof.

10. The method of claim 6, wherein the electrolysis facility includes, according to a type of the treatment agent:
a first electrolysis line configured to manufacture a first treatment agent; and
a second electrolysis line configured to manufacture a second treatment agent, and
the types of the first and second treatment agents are different.

11. The method of claim 1, wherein a concentration of the treatment agent is 0.01 to 50%.

12. The method of claim 1, wherein the treatment agent includes a chloric acid compound, a salt of a peroxoacid, or a combination thereof.

13. The method of claim 12, wherein the chloric acid compound is hypochlorite.

14. The method of claim 1, wherein, in the second step, the manufactured treatment agent is stored in an airtight repository in which one selected from the group consisting of temperature, humidity, pressure, and a combination of two or more thereof is controlled.

15. The method of claim 1, wherein the treatment agent is injected into a cartridge in the second step, and
the cartridge is installed in the vessel anchored at the second base in the third step.
